# EUROPEAN PATENT SPECIFICATION

(11) **EP 1 958 842 B1**
(45) Date of publication and mention of the grant of the patent: **12.10.2011**
(21) Application number: 08001644.7
(22) Date of filing: 29.01.2008
(51) Int. Cl.: B60W 50/08, B60W 30/08

(54) **Driving assistance for a vehicle**
Fahrhilfe für ein Fahrzeug
Assistance à la conduite pour véhicule

(30) Priority: 15.02.2007 JP 2007035080
(43) Date of publication of application: 20.08.2008
(73) Proprietor: Mazda Motor Corporation, Aki-gun, Hiroshima 730-8670 (JP)
(72) Inventor: Matsuoka, Satoru, Aki-gun, Hiroshima 730-8670 (JP); Iyota, Teru, Aki-gun, Hiroshima 730-8670 (JP); Utsumi, Masashi, Aki-gun, Hiroshima 730-8670 (JP); Yonezawa, Hironobu, Aki-gun, Hiroshima 730-8670 (JP); Iwase, Koji, Aki-gun, Hiroshima 730-8670 (JP); Takahashi, Hideki, Aki-gun, Hiroshima 730-8670 (JP)
(74) Representative: Müller-Boré & Partner Patentanwälte

(56) References cited:
- WO-A-98/33676
- CA-A1- 2 102 076
- JP-A- 2005 241 516
- JP-A- 2005 329 811
- JP-A- 2006 015 803
- US-A1- 2002 011 925

## Description

The present invention relates to a driving assist device, method and computer program product for a vehicle.

Conventionally, various technologies for assisting a safe driving of a vehicle have been proposed. US Patent Application Publication No. 2005/0128063 A1, for example, discloses a driving assist device for a vehicle in which a warning sound is produced when it is determined that the vehicle could not stop before an obstacle existing in front of the traveling vehicle and therefore it could have a likelihood of collision against the obstacle.

The technology disclosed in the above-described patent, however, has a problem in that there may exist a time lag until a driver can conduct a necessary operation to avoid collision against the obstacle after the driver have recognized the collision likelihood based on the warning sound and the collision could not be surely prevented.

CA 2 102 076 A1 discloses a system for providing safe interval driving signals including a radar that monitors and measures a distance between two vehicles.

JP 2005/329 811 a discloses an alarm device for a vehicle for suppressing a dispersion of a response time of a driver.

The present invention has been devised in view of the above-described technical problem, and an object of the present invention is to allow avoiding a collision surely by encouraging a driver to conduct any necessary operation to avoid it quickly.

This object is solved according to the present invention by the features of the independent claims. Preferred embodiments of the present invention are subject of the dependent claims.

According to the present invention, there is provided a driving assist device for a vehicle, comprising a specified-operation detecting device operative to detect that specified operation is conducted by a driver at a normal driving state, a normal-driving-state stimulation providing device operative to provide the driver with a specified stimulation that is associated with the specified operation when conduction of the specified operation by the driver is detected by the specified-operation detecting device, a collision-likelihood determining device operative to determine a likelihood of collision of the vehicle against an obstacle, a collision-avoidance operation determining device operative to determine a necessary operation to be conducted by the driver for avoidance of collision when the likelihood of collision of the vehicle against the obstacle is determined by the collision-likelihood determining device, and a collision-avoidance-state stimulation providing device operative to provide the driver with a stimulation that is associated with the necessary operation for avoidance of collision so that the driver can be encouraged to conduct the necessary operation for avoidance of collision that is determined by the collision-avoidance operation determining device, wherein the normal-driving-state stimulation providing device is configured to provide the driver with a subliminal stimulation that is less stimulative than a recognition limit of the driver so as to be memorized by the driver subliminally and the collision avoidance state stimulation providing device is configured to provide the driver with a recognizable stimulation that is more stimulative than a recognition limit of the driver.

According to the present invention, since the stimulation and the specified operation are memorized by the driver in association with each other, the driver can be encouraged to conduct any necessary operation to avoid the collision quickly.

According to an embodiment of the present invention, the stimulation is configured to be a plurality of recognizable stimulations, which are associated with a specified necessary operation for avoidance of collision, respectively. Particularly, the plurality of stimulations are different from each other. Thereby, a suitable operation to avoid the collision can be selected according to various situations, thereby encouraging the driver to conduct the suitable operation to avoid the collision quickly.

According to another embodiment of the present invention, the necessary operation for avoidance of collision comprises at least one of a steering operation, an acceleration-off operation, a braking-on operation, and a watching operation, and the collision-avoidance operation determining device is configured to determine at least one of the steering operation, acceleration-off operation, braking-on operation, and watching operation as the necessary operation for avoidance of collision to be conducted by the driver. Thereby, the suitable operation to avoid the collision can be selected according to the various situations.

According to the present invention, the normal-driving-state stimulation providing device is configured to provide the driver with a subliminal stimulation that is less stimulative than a recognition limit of the driver so as to be memorized by the driver subliminally. Thereby, the driver can be made memorize the stimulation associated with the specified operation subliminally, without letting the driver feel uncomfortable.

According to the present invention, the collision-avoidance-state stimulation providing device is configured to provide the driver with a recognizable stimulation that is more stimulative than a recognition limit of the driver. Thereby, the driver can be surely encouraged to conduct any necessary operation to avoid the collision.

According to another embodiment of the present invention, the stimulation provided by said normal-driving-state stimulation providing device comprises a warning sound, an image indicated on a head-up display and/or a steering vibration.

According to another embodiment of the present invention, the stimulation provided by the normal-driving-state stimulation providing device is a warning sound. Thereby, the stimulation and the specified operation can be memorized by the driver in association with each other by using the warning sound, so the driver can be properly encouraged to conduct any necessary operation to avoid the collision quickly.

According to another embodiment of the present invention, the stimulation provided by the normal-driving-state stimulation providing device is an image indicated on a head-up display. Thereby, the stimulation and the specified operation can be memorized by the driver in association with each other by using the image indicated on the head-up display, so the driver can be properly encouraged to conduct any necessary operation to avoid the collision quickly.

According to another embodiment of the present invention, the stimulation provided by the normal-driving-state stimulation providing device is a steering vibration. Thereby, the stimulation and the specified operation can be memorized by the driver in association with each other by using the steering vibration, so the driver can be properly encouraged to conduct any necessary operation to avoid the collision quickly.

According to another embodiment of the present invention, the normal-driving-state stimulation providing device is configured to provide the driver with the stimulation at specified limited number of times after a vehicle start. Thereby, since providing the driver with the stimulation is cancelled after the specified number of times that is suitable for the driver to subliminally memorize the stimulation and the specified operation in association with each other, for example, processing can be simplified.

According to another embodiment of the present invention, said normal-driving-state stimulation providing device is configured to provide the driver with a normal-driving-state stimulation that is less stimulative than a collision-avoidance-state stimulation of said collision-avoidance-state stimulation providing device.

According to the present invention, there is further provided a driving assist method for a vehicle, in particular for use in a driving assist device according to the invention or a preferred embodiment thereof, comprising the following steps:
detecting that a specified operation is conducted by a driver at a normal driving state;
providing the driver with a specified stimulation that is associated with the specified operation when conduction of the specified operation by the driver is detected;
determining a likelihood of collision of the vehicle against an obstacle;
determining a necessary operation to be conducted by the driver for avoidance of collision when the likelihood of collision of the vehicle against the obstacle is determined; and
providing the driver with a stimulation that is associated with the necessary operation for avoidance of collision so that the driver can be encouraged to conduct the necessary operation for avoidance of collision that has been determined, including;
providing the driver with a subliminal stimulation that is less stimulative than a recognition limit of the driver so as to be memorized by the driver subliminally and providing the driver with a recognizable stimulation that is more stimulative than a recognition limit of the driver.

According to another embodiment of the present invention, said stimulation is configured to be a plurality of recognizable stimulations, which are associated with a specified necessary operation for avoidance of collision, respectively.

According to another embodiment of the present invention, said necessary operation for avoidance of collision comprises at least one of a steering operation, an acceleration-off operation, a braking-on operation, and a watching operation, and at least one of the steering operation, acceleration-off operation, braking-on operation, and watching operation as the necessary operation for avoidance of collision to be conducted by the driver is determined.

According to another embodiment of the present invention, the driver is provided with a subliminal stimulation that is less stimulative than a recognition limit of the driver so as to be memorized by the driver subliminally.

According to another embodiment of the present invention, the driver is provided with a recognizable stimulation that is more stimulative than a recognition limit of the driver.

According to another embodiment of the present invention, the provided normal-driving-state stimulation comprises a warning sound, an image indicated on a head-up display and/or a steering vibration.

According to another embodiment of the present invention, the driver is provided with the normal-driving-state stimulation at specified limited number of times after a vehicle start.

According to another embodiment of the present invention, the driver is provided with a normal-driving-state stimulation that is less stimulative than a collision-avoidance-state stimulation.

According to the present invention, there is further provided a computer program product, particularly embodied on a computer-readable storage medium, as a signal or as a data stream, which comprises computer readable instructions which, when loaded and executed on a suitable system perform the steps of a driving assist method for a vehicle according to the invention or a preferred embodiment thereof.

Other features, aspects, and advantages of the present invention will become apparent from the following description which refers to the accompanying drawings. It should be understood that even though embodiments are separately described, single features thereof may be combined to additional embodiments.
**FIG. 1** is an explanatory diagram schematically showing a vehicle equipped with a driving assist device according to an embodiment of the present invention.
**FIG. 2** is a block diagram showing components of the driving assist device and a control unit to control them.
**FIG. 3** is an explanatory diagram regarding operations that are conducted by a driver at a normal driving state or at a collision-avoidance state, which are associated with respective stimulations.
**FIG. 4** is a chart showing relationships between the operations conducted by the driver at the normal driving state or at the collision-avoidance state and a warning sound.
**FIG. 5** is a chart showing relationships between the operations conducted by the driver at the normal driving state or at the collision-avoidance state and an image displayed on a head-up display.
**FIG. 6** is a chart showing relationships between the operations conducted by the driver at the normal driving state or at the collision-avoidance state and a signal wave for a steering vibration.
**FIG. 7** is a chart showing relationships between the operations conducted by the driver at the normal driving state or at the collision-avoidance state and the warning sound, signal wave for the steering vibration, and image displayed on the head-up display.
**FIG. 8** is a first flowchart of a driving assist processing that is executed by the control unit.
**FIG. 9** is a second flowchart of the driving assist processing that is executed by the control unit.
**FIG. 10** is a chart the human sound perception as a function of the frequency f [kHz] on the abscissa and the sound pressure [dB] on the ordinate.

Hereinafter, a preferred embodiment of the present invention will be described referring to the accompanying drawings.

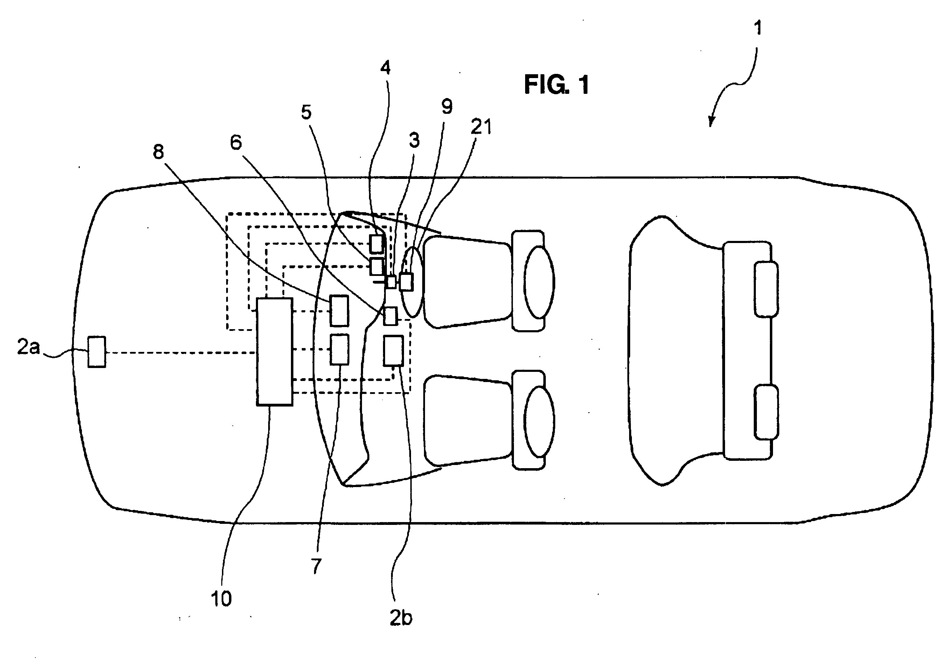

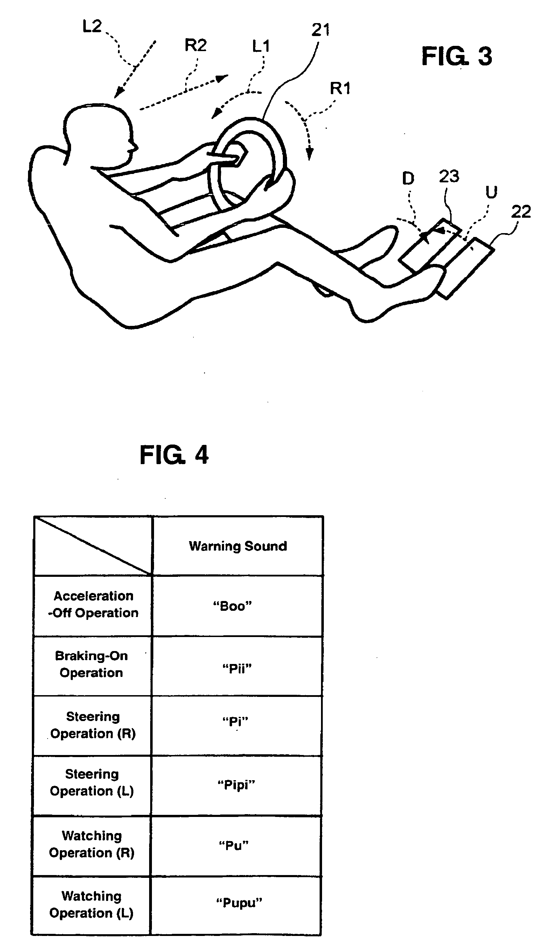

FIG. **1** is an explanatory diagram schematically showing a vehicle equipped with a driving assist device according to an embodiment of the present invention. A vehicle **1** is equipped with, as components of a driving assist device, one or more, preferably a pair of obstacle detecting sensors **2a, 2b** to detect an obstacle in the vicinity of, preferably substantially in front of a traveling vehicle, which may be comprised of a radar or camera, for example, a steering angle sensor **3** to detect a steering angle of a steering wheel **21** (see FIG. **3**), an acceleration pedal sensor **4** to detect a requested acceleration amount such as a pedal-pressing amount of an acceleration pedal **22** (see FIG. **3**), and a brake pedal sensor 5 to detect a braking activity such as a pedal-pressing amount of a brake pedal **23** (see FIG. **3**).

The vehicle **1** is further equipped with an eyes-position or eyes-direction detecting sensor **6** to detect a position or direction of driver's eyes, a warning-sound producer **7** to produce a warning sound as a stimulation provided to the driver, a head-up display output device **8** to indicate an image on a head-up display as another stimulation provided to the driver, and/or a steering-vibration generating actuator **9** to give a vibration to the steering wheel **21** as further another stimulation provided to the driver. Herein, a conventionally well-known electronic steering derive motor that is provided at a steering shaft portion to control the steering wheel **21** may be applied as the steering-vibration generating actuator **9.** It should be understood that there may be alternatively or additionally provided any warning to the driver as a stimulation provided to the driver by means of a warning device **9'** such as a warning display or lamp, a safety belt tensioner applying a specified (predetermined or predeterminable) tension to an unillustrated safety belt for the driver, or the like. In this connection, a stimulation is the action of various agents (stimuli) on muscles, nerves or a sensory end organ of humans, by which activity is evoked (in particular, the nervous impulse produced by various agents on nerves, or a sensory end organ of humans, by which the part connected with the nerve is thrown into a state of activity). The extent or strength or effect of a stimulation (particularly as of when a stimulus is considered to be subliminal to a human) may be determined by psychophysical experiments.

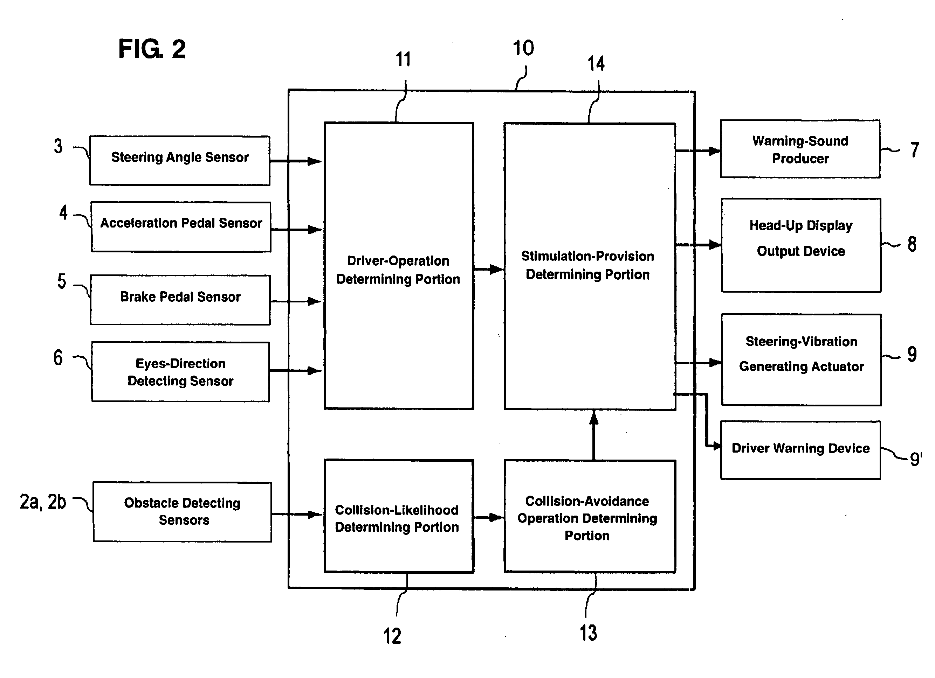

The vehicle **1** is further equipped with a control unit **10** that is comprised of a micro computer, which is to be electrically or electronically coupled or connected to the above-described sensors and devices. The control unit **10** executes various processing for controlling the devices based on signals from the sensors. FIG. **2** is a block diagram showing the above described components and the control unit **10**. As shown in FIG. **2****,** to the control unit **10** are to be electrically or electronically coupled or connected to the obstacle detecting sensors **2a, 2b,** steering angle sensor **3,** acceleration pedal sensor **4**, brake pedal sensor 5, and/or eyes-direction detecting sensor **6.**

The control unit **10** of the present embodiment controls the warning-sound producer **7,** the head-up display output device **8,** the steering-vibration generating actuator **9** and/or the warning device **9'** at a normal driving state so as to provide the driver with stimulations according to a specified (predetermined or predeterminable) operation of the driver. Herein, the stimulations provided are associated with respective operations of the driver. Thereby, the stimulations and the operations can be subliminally memorized by the driver in association with each other. Then, when there occurs a likelihood of collision, the control unit **10** determines necessary operations to avoid the collision and controls the warning-sound producer **7,** the head-up display output device **8,** the steering-vibration generating actuator **9** and/or the warning device **9'** so as to provide the driver with stimulations associated with the necessary operations to avoid the collision. Herein, the stimulation preferably is configured so that the same manner of stimulation is set for common operations of the specified (predetermined or predeterminable) operation that is conducted by the driver at the normal driving state and the necessary operation to be conducted by the driver at a collision-avoidance state (to avoid the collision). Accordingly, the driver can react the stimulation provided so quickly that the suitable operation to avoid the collision can be surely executed by the driver.

More specifically, as shown in FIG. **2**, the control unit **10** preferably has one or more of the following: a driver-operation determining function of determining the operation conducted by the driver at the normal driving state (hereinafter, referred to as "driver operation") based on signals of the steering angle sensor **3,** acceleration pedal sensor **4**, brake pedal sensor **5,** and eyes-direction detecting sensor **6,** a collision-likelihood determining function of determining the likelihood of collision of the vehicle **1** against the obstacle based on the obstacle detecting sensors **2a, 2b,** a collision-avoidance operation determining function of determining a necessary operation to be conducted by the driver to avoid the collision when the likelihood of collision is determined, and/or a stimulation-provision determining function of outputting control signals to the warning-sound producer **7,** the head-up display output device **8** and the steering-vibration generating actuator **9** so as to provide stimulations that have been in advance associated with the driver operation and the necessary operation for collision avoidance based on the above-described determinations of the driver operation and the necessary operation for collision avoidance.

Herein, the above-described functions respectively correspond to a driver-operation determining portion **11,** a collision-likelihood determining portion **12,** a collision-avoidance operation determining portion **13,** and/or a stimulation-provision determining portion **14** in FIG. **2**. Although these portions are illustrated as if they were hardware constitutions in FIG. **2**, this is because relationships between the control unit **10** and these electrically or electronically coupled or connected to the unit **10** are just shown schematically.

According to the above-described configuration of the control unit **10**, the stimulation associated with the driver operation are provided to the driver from the warning-sound producer **7,** the head-up display output device **8** the steering-vibration generating actuator **9** and/or of the warning device **9'** according to determination and/or the prediction of the driver operation. Thereby, the stimulation and the specified (predetermined or predeterminable) driver operation are interiorized (particularly subliminally memorized) by the driver in association with each other. In the present embodiment, provision of the stimulation preferably is conducted at specified (predetermined or predeterminable) limited number of times after an engine start for each driver operation. Herein, the specified (predetermined or predeterminable) number of times is set to be suitable for the driver to subliminally memorize the stimulation and the specified (predetermined or predeterminable) driver operation in association with each other.

Then, in a case where after the above-described interiorization (subconscious or subliminal memorization) of the stimulation by the driver is complete, the warning-sound producer **7,** the head-up display output device **8,** the steering-vibration generating actuator **9** and/or the warning device **9'** output (provide) the stimulation associated with the collision-avoidance operation according to the determination or prediction of the collision-avoidance operation (the necessary operation for collision avoidance). The driver responds to the stimulation outputted (provided) and (particularly reflexively) at least partly conducts the specified (predetermined or predeterminable) driver operation that is associated with the stimulation outputted. Herein, since the stimulation is configured so that the same manner of stimulation is set for common operations of the driver operation and the collision-avoidance operation (the necessary operation for collision avoidance), the driver can quickly conduct the suitable operation for the collision avoidance. Accordingly, the collision of the traveling vehicle 1 against the obstacle can be surely avoided.

FIG. **3** is an explanatory diagram regarding the driver operation and the collision-avoidance operation that are associated with respective stimulations. In the present embodiment, as shown in **FIG. 3**, respective operations of a steering operation for right turn or left turn of the steering wheel **21** denoted by arrows **R1, L1,** an off-operation of the acceleration pedal **22** denoted by an arrow **U,** an on-operation of the brake pedal **23** denoted by an arrow **D,** and a left and right watching operation denoted by arrows **L2, R2** are associated with different stimulations, respectively. Herein, different stimulations preferably are set for different directions (right or left) of the operations of the steering operation of the steering wheel **21** and the watching operation.

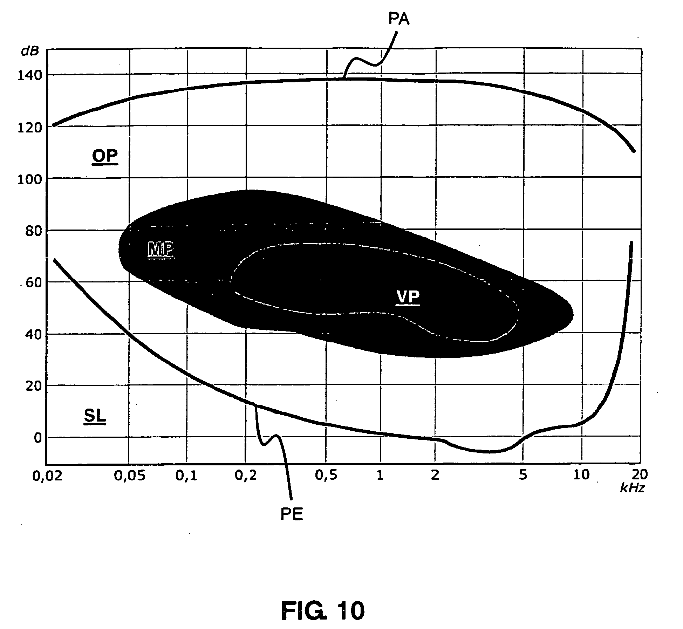

FIG. **4** is a chart showing relationships between the driver operation/collision-avoidance operation and a warning sound produced by the warning-sound producer **7.** As shown, recognizably-different warning sounds preferably are set or determined for the specified (predetermined or predeterminable) driver operation/collision-avoidance operation. In the present embodiment, the warning sound to be produced at the normal driving state preferably is set to a subliminal stimulation that is less stimulative than a recognition limit of the driver so as to be memorized by the driver subliminally, that is, its frequency is out of the range of hearing (i.e., lower than about 20 Hz or greater than about 20 kHz, for example). It is pointed out that the human ear itself typically does not respond to frequencies below 20 Hz, but these can nevertheless be perceived particularly via the body's sense of touch. Here, recent research has demonstrated a hypersonic effect which is that although sounds above 20 kHz cannot consciously be heard, they can nevertheless have an effect on the human listener. Reference is made to FIG. **10** which is a chart the human sound perception as a function of the frequency f [kHz] on the abscissa and the sound pressure [dB] on the ordinate, the chart showing: an area VP in which humans can normally perceive voices or natural speaking, an area MP in which music can normally be perceived and an area OP in which other kind of sound can be perceived by humans, wherein PA denotes the line above which humans feel pain and PE denotes a line below which no hearing is possible. Preferably, the subliminal stimulation is performed with sound having frequency and sound pressure values being in an area SL below the line PE and/or lower than about 20 Hz or greater than about 20 kHz (i.e. outside of the graph shown in FIG. 10). Additionally, the producing time, sound volume or pressure and the frequency of the warning sound outputted are set at respective appropriate levels so that the driver does not feel so uncomfortable. Meanwhile, the warning sound to be produced at the collision-avoidance state is set to a recognizable stimulation that preferably is more stimulative than the recognition limit of the driver. Accordingly, the driver is not made feel so uncomfortable with the warning sound at the normal driving state, while the drive can be made surely recognize the likelihood of collision at the collision-avoidance state. The extent or strength or effect of a sound stimulation (particularly as of when a sound stimulus is considered to be subliminal to a human) may be determined by psychophysical hearing experiments which traditionally use the following methods for testing human's or subjects' perception in stimulus detection and difference detection experiments: the method of limits, the method of constant stimuli, and the method of adjustment (ref. e.g. to Snodgrass JG. 1975. Psychophysics. In: Experimental Sensory Psychology. B Scharf. (Ed.) pp. 17-67). According to the method of limits of Wilhelm Wundt, the subject reports whether he or she detects the stimulus. In ascending method of limits, some property of the stimulus starts out at a level so low that the stimulus could not be detected, then this level is gradually increased until the participant reports that they are aware of it. For example, if the experiment is testing the minimum amplitude of sound that can be detected, the sound begins too quietly to be perceived, and is made gradually louder. In the descending method of limits, this is reversed. In each case, the threshold is considered to be the level of the stimulus property at which the stimuli is just detected. In experiments, the ascending and descending methods may be used alternately and the thresholds may be averaged. Alternatively or additionally, the staircase method of Georg von Beseky may be used. In this method, the sound starts out audible and gets quieter after each of the subject's responses, until the subject does not report hearing it. At that point, the sound is made louder at each step, until the subject reports hearing it, at which point it is made quieter in steps again. This way the experimenter is able to "zero in" on the threshold. Instead of being presented in ascending or descending order, in the method of constant stimuli the levels of a certain property of the stimulus are not related from one trial to the next, but presented randomly. This prevents the subject from being able to predict the level of the next stimulus, and therefore reduces errors of habituation and expectation. The subject again reports whether he or she is able to detect the stimulus.Finally, the method of adjustment may be used which asks the subject to control the level of the stimulus, instructs them to alter it until it is just barely detectable against the background noise, or is the same as the level of another stimulus. This is also called the method of average error.

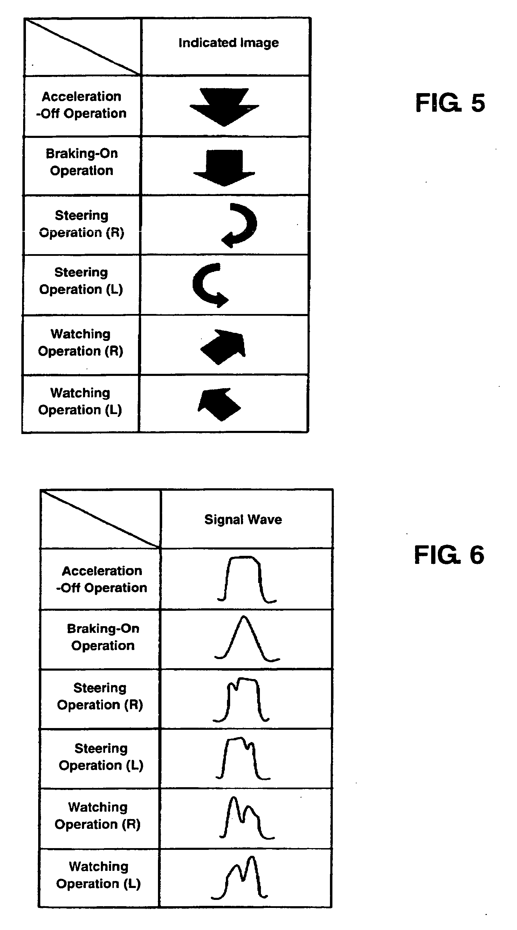

FIG. 5 is a chart showing relationships between the driver operation/collision-avoidance operation and an image displayed on the head-up display output device 8. As shown, recognizably-different images are set for the specified (predetermined or predeterminable) driver operation/collision-avoidance operation. In the present embodiment, the image to be displayed at the normal driving state is set to the (preferably subliminal) stimulation that is less stimulative than a recognition limit of the driver so as to be memorized by the driver preferably subliminally, that is, its display time is very short (i.e., shorter than about 0.3 sec, preferably 0.05 - 0.1 sec, for example). Additionally, the indication time, color and brightness of the image indicated preferably are set at respective appropriate levels so that the driver does not feel so uncomfortable. Meanwhile, the image to be indicated at the collision-avoidance state is set to the (preferably recognizable) stimulation that is more stimulative than a recognition limit of the driver, i.e., the image preferably having a longer display time. Accordingly, the driver is not made feel so uncomfortable with the image display at the normal driving state, while the drive can be made surely recognize the likelihood of collision at the collision-avoidance state.

FIG. **6** is a chart showing relationships between the driver operation/collision-avoidance operation and a signal wave for a steering vibration that controls the steering-vibration generating actuator 9. As shown, recognizably-different signal wave for the steering vibration are set for the specified (predetermined or predeterminable) driver operation/collision-avoidance operation. In the present embodiment, the signal wave for the steering vibration to be used at the normal driving state is set to the one that can generate a vibration of a (preferably subliminal) stimulation that is less stimulative than a recognition limit of the driver so as to be memorized by the driver preferably subliminally, that is, its vibration pulse width is very short (i.e., shorter than about 0.2 sec, preferably about 0.1 sec of vibration pulse width, for example). Additionally, the vibration level, frequency, time of the signal wave for the steering vibration used preferably are set at respective appropriate levels so that the driver does not feel so uncomfortable. Meanwhile, the signal wave to be used at the collision-avoidance state is set to the one that can generate a vibration of a (preferably recognizable) stimulation that is more stimulative than a recognition limit of the driver. Accordingly, the driver is not made feel so uncomfortable with the vibration generated at the normal driving state, while the drive can be made surely recognize the likelihood of collision at the collision-avoidance state.

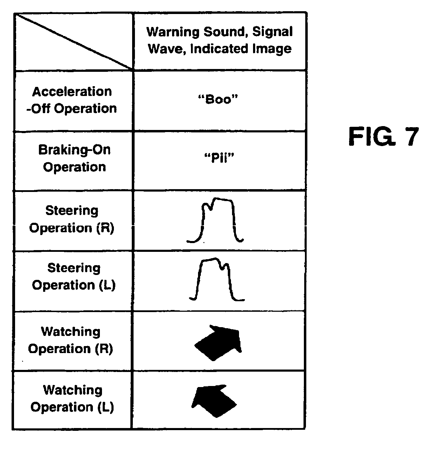

Herein, the warning-sound producer **7**, the head-up display output device **8** and the steering-vibration generating actuator **9** may be operated in combination. One example of that is disclosed in FIG. **7****.**

The same or similar principles as above may be applied to or used for any other warning device **9'.**

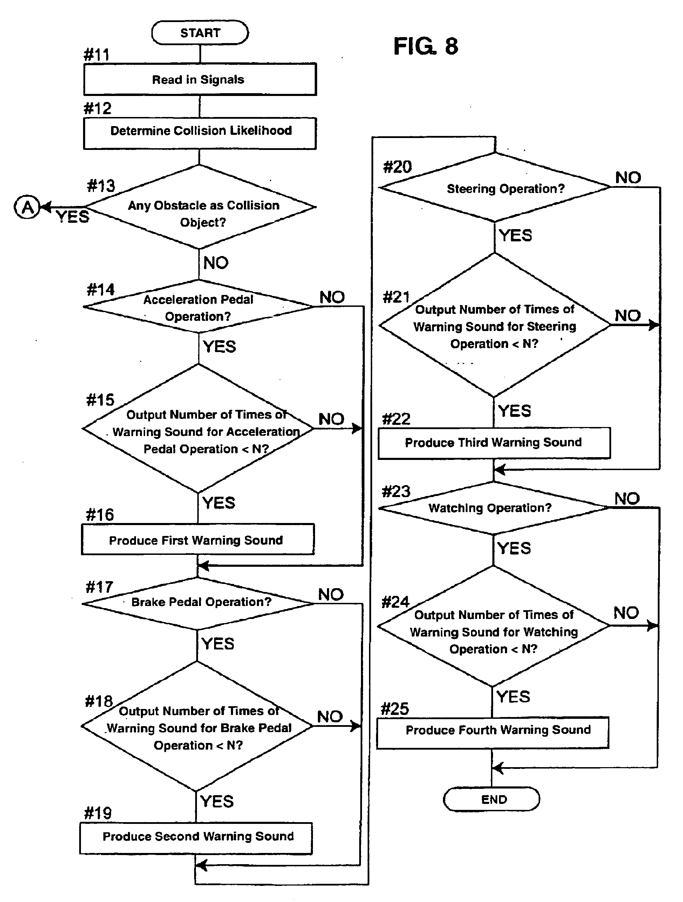

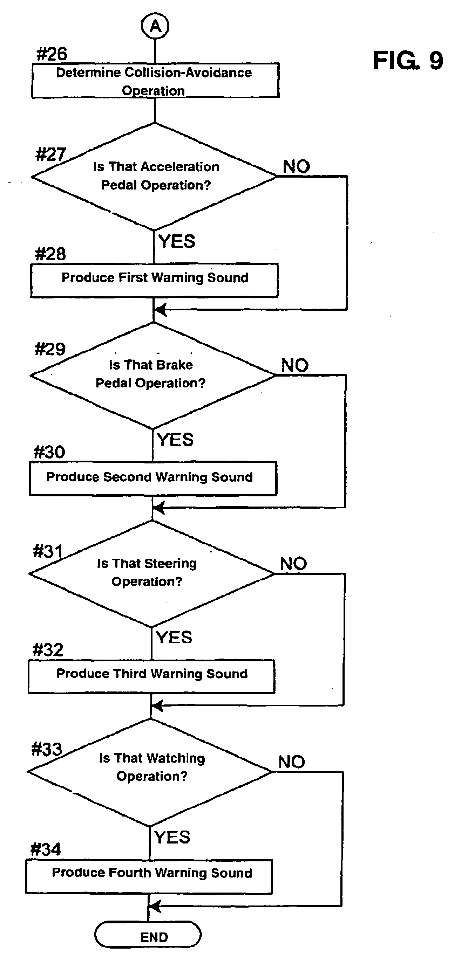

FIGS. **8** and **9** are a first flowchart and a second flowchart of a driving assist processing that is executed by the control unit **10.** In these flowcharts, a case in which only the warning-sound producer **7** is used as an exemplary device to provide the stimulation is described. Further, although in fact the different stimulations are associated according to the operational directions of the right and the left for the steering operation and the watching operation by the driver, the similar or same processing is described regardless of this difference in these flowcharts for simplification.

First, signals from the various devices and sensors are read in **(#11),** and then the likelihood of collision is determined or predicted based on the signals from one or more of the following: any obstacle detecting sensors **2a, 2b** and information including a distance between the obstacle and the traveling vehicle **1** and a vehicle's approaching speed (**#12**). Next, it is determined based on the determination result in a step **#12** whether or not there exists any obstacle as an object for collision avoidance (i.e., any obstacle having a high likelihood of collision or a likelihood above a specified (predetermined or predeterminable) threshold) **(#13).** For example, if the time to the collision that may be calculated from the distance between a specified obstacle and the traveling vehicle 1 and the vehicle's approaching speed toward the specified obstacle is shorter than a specified (predetermined or predeterminable) time, it is determined or predicted the traveling vehicle 1 may collide against the specified obstacle.

When it is determined that there exists the obstacle as the object for collision avoidance in the step **#13,** the control sequence proceeds to step **#26** in FIG. **9****.** Meanwhile, when it is determined that there exists no obstacle as the object for collision avoidance, the control sequence proceeds to step **#14.** In the step **#14,** it is determined based on the signal from the acceleration pedal sensor **4** whether there is an operation of the acceleration pedal or not or whether the operation of the accelerator pedal is below a specified (predetermined or predeterminable) threshold (an off-operation of the acceleration pedal in the present embodiment). When it is determined that there is no any acceleration pedal operation (or the operation is below the specified threshold), the control sequence proceeds to step **#17.** Meanwhile, when it is determined that there is the acceleration pedal operation, it is subsequently determined whether or not the output number of times of the warning sound, which corresponds to the number of times of the acceleration pedal operation after the engine start, is less than a specified (predetermined or predeterminable) number N**(#15).**

When it is determined that the output number of times of the warning sound is not less than N in the step **#15** (i.e., the output number of times is N or more), the control sequence directly proceeds to the step **#17**, considering that the acceleration pedal operation and the first warning sound (a "boo"-like sound or sound having a low frequency and a long duration in the present embodiment) have been (preferably subliminally) memorized by the driver in association with each other. When it is determined that the output number of times of the warning sound is still less than N, the control signal is outputted to the warning-sound producer **7** and the first warning sound associated with the acceleration pedal operation is produced (**#16**), and then the control sequence proceeds to the step **#17**.

In the step **#17**, it is determined based on the signal from the brake pedal sensor **5** whether there is an operation of the brake pedal or not (an on-operation of the brake pedal in the present embodiment). When it is determined that there is no any brake pedal operation (or the operation of the brake pedal is below a specified (predetermined or predeterminable) threshold), the control sequence proceeds to step **#20.** Meanwhile, when it is determined that there is the brake pedal operation, it is subsequently determined whether or not the output number of times of the warning sound, which corresponds to the number of times of the brake pedal operation after the engine start, is less than a specified (predetermined or predeterminable) number N(**#18**).

When it is determined that the output number of times of the warning sound is not less than N in the step **#18** (i.e., the output number of times is N or more), the control sequence directly proceeds to the step **#20**, considering that the brake pedal operation and the second warning sound (a "pii"-like sound or a sound having a sharp tone or high frequency and a long duration in the present embodiment) have been (preferably subliminally) memorized by the driver in association with each other. When it is determined that the output number of times of the warning sound is still less than N, the control signal is outputted to the warning-sound producer **7** and the second warning sound associated with the brake pedal operation is produced **(#19),** and then the control sequence proceeds to the step **#20.**

In the step **#20**, it is determined based on the signal from the steering-angle sensor **3** whether there is an operation of the steering or not. When it is determined that there is no any steering operation, the control sequence proceeds to step **#23**. Meanwhile, when it is determined that there is the steering operation, it is subsequently determined whether or not the output number of times of the warning sound, which corresponds to the number of times of the steering operation after the engine start, is less than a specified (predetermined or predeterminable) number N (**#21**).

When it is determined that the output number of times of the warning sound is not less than N in the step **#21** (i.e., the output number of times is N or more), the control sequence directly proceeds to the step **#23,** considering that the steering operation and the third warning sound (a "pi" or "pipi" sound or a sound having a sharp tone or high frequency and a short duration or a repeated short duration in the present embodiment) have been (preferably subliminally) memorized by the driver in association with each other. When it is determined that the output number of times of the warning sound is still less than N, the control signal is outputted to the warning-sound producer **7** and the third warning sound associated with the steering pedal operation is produced (**#22**), and then the control sequence proceeds to the step **#23.**

In the step **#23**, it is determined based on the signal from the eyes-direction or -position detecting sensor **6** whether there is an operation of watching or not. When it is determined that there is no any watching operation, the control sequence proceeds to the end. Meanwhile, when it is determined that there is the watching operation, it is subsequently determined whether or not the output number of times of the warning sound, which corresponds to the number of times of the watching operation after the engine start, is less than a specified (predetermined or predeterminable) number N (**#24**).

When it is determined that the output number of times of the warning sound is not less than N in the step **#24** (i.e., the output number of times is N or more), the control sequence proceeds to the end, considering that the watching operation and the fourth warning sound (a "pu" or "pupu" sound or sound having a low frequency and a short duration or a repeated short duration in the present embodiment) have been (preferably subliminally) memorized by the driver in association with each other. When it is determined that the output number of times of the warning sound is still less than N, the control signal is outputted to the warning-sound producer **7** and the fourth warning sound associated with the watching operation is produced (**#25**), and then the control sequence proceeds to the end.

The above-described steps **#14-#25** are steps for making the driver (preferably subliminally) memorize or recognize the respective driver operations and the different warning sounds in association with each other at the normal driving state. Meanwhile, steps **#26-#34** that will be described below are steps for determining the necessary operation to avoid the collision and for outputting (producing) the specified (predetermined or predeterminable) warning sound that is associated with the necessary operation for collision avoidance so as to encourage the driver to conduct the necessary operation for the collision avoidance.

Specifically, a collision-avoidance operation that is necessary to avoid the collision is determined in the step **#26**. Next, it is determined whether the collision-avoidance operation is the acceleration pedal operation or not (**#27**). When it is determined that the collision-avoidance operation is not the acceleration pedal operation, the control sequence proceeds to step **#29**. When it is determined that the collision-avoidance operation is the acceleration pedal operation, the control signal is outputted to the warning-sound producer **7** and the first warning sound associated with the acceleration pedal operation is produced (**#28**), and then the control sequence proceeds to step **#28**. Herein, the driver recognizes that the acceleration pedal operation is required now by hearing the first warning sound produced in the step **#28.** That is, the driver is encouraged to conduct the acceleration pedal operation.

In the step **#29**, it is determined whether the collision-avoidance operation is the brake pedal operation or not. When it is determined that the collision-avoidance operation is not the brake pedal operation, the control sequence proceeds to step **#31.** When it is determined that the collision-avoidance operation is the brake pedal operation, the control signal is outputted to the warning-sound producer **7** and the (different) second warning sound associated with the brake pedal operation is produced (**#30**), and then the control sequence proceeds to step **#31**. Herein, the driver recognizes that the brake pedal operation is required now by hearing the second warning sound produced in the step **#30.** That is, the driver is encouraged to conduct the brake pedal operation.

In the step **#31**, it is determined whether the collision-avoidance operation is the steering operation or not. When it is determined that the collision-avoidance operation is not the steering operation, the control sequence proceeds to step **#33.** When it is determined that the collision-avoidance operation is the steering operation, the control signal is outputted to the warning-sound producer **7** and the third (still different) warning sound associated with the steering pedal operation is produced (**#32**), and then the control sequence proceeds to step **#33.** Herein, the driver recognizes that the steering operation is required now by hearing the third warning sound produced in the step **#32**. That is, the driver is encouraged to conduct the steering operation.

In the step **#33**, it is determined whether the collision-avoidance operation is the watching operation or not. When it is determined that the collision-avoidance operation is not the watching operation, the control sequence proceeds to the end. When it is determined that the collision-avoidance operation is the watching operation, the control signal is outputted to the warning-sound producer 7 and the fourth warning sound ((different from the preceding firts to third warning sounds) associated with the watching operation is produced (**#34**), and then the control sequence proceeds to the end. Herein, the driver recognizes that the watching operation is required now by hearing the fourth warning sound produced in the step **#34**. That is, the driver is encouraged to conduct the watching operation.

As apparent from the above description, according to the present embodiment, the driver is made memorize the stimulation and the specified operation in association with each other, and when there occurs the likelihood of collision of the traveling vehicle against the obstacle, the stimulation associated with the necessary operation to avoid the collision is provided to the driver. Thereby, the driver can be encouraged to reflexively (quickly) conduct the necessary operation to avoid the collision, so that the collision can be avoided surely.

Further, since the preferably subliminal stimulation that is less stimulative than the recognition limit of the driver so as to be memorized by the driver subliminally is provided to the driver at the normal driving state, the driver can be made memorize or recognize the stimulation associated with the specified operation subliminally or with a stimulation level being very low or close/below the level which can be positively perceived by the driver, particularly without letting the driver feel uncomfortable. Also, the recognizable stimulation that is more stimulative than the recognition limit of the driver preferably is provided to the driver at the collision-avoidance state, the driver can be surely encouraged to conduct any necessary operation to avoid the collision.

Also, since providing the driver with the stimulation is cancelled after the specified (predetermined or predeterminable) number of times that is suitable for the driver to subliminally memorize the stimulation and the specified operation in association with each other, processing can be simplified.

The present invention should not be limited to the above-described embodiment.

The invention is defined by appended claims only.

## Claims

1. A driving assist device for a vehicle **(1),** comprising:
a collision-likelihood determining device **(12)** operative to determine a likelihood of collision of the vehicle against an obstacle;
a collision-avoidance operation determining device **(13)** operative to determine a necessary operation to be conducted by the driver for avoidance of collision when the likelihood of collision of the vehicle against the obstacle is determined by said collision-likelihood determining device **(12);** and
a collision-avoidance-state stimulation providing device **(7, 8, 9, 14, #26-34)** operative to provide the driver with a stimulation that is associated with the necessary operation for avoidance of collision so that the driver can be encouraged to conduct the necessary operation for avoidance of collision that is determined by said collision-avoidance operation determining device **(13),** wherein said collision-avoidance-state stimulation providing device **(7, 8, 9, 14, #26-34)** is configured to provide the driver with a recognizable stimulation that is more stimulative than a recognition limit of the driver;
**characterized by**
a specified-operation detecting device **(3, 4, 5, 6, 11)** operative to detect that a specified operation is conducted by a driver at a normal driving state; and
a normal-driving-state stimulation providing device **(7, 8, 9, 14, #13-25)** operative to provide the driver with a specified stimulation that is associated with the specified operation when conduction of the specified operation by the driver is detected by said specified-operation detecting device **(3, 4, 5, 6, 11);**
wherein said normal-driving-state stimulation providing device **(7, 8, 9, 14, #13-25)** is configured to provide the driver with a subliminal stimulation that is less stimulative than a recognition limit of the driver so as to be memorized by the driver subliminally.

2. The driving assist device for a vehicle **(1)** of claim 1, wherein said stimulation is configured to be a plurality of recognizable stimulations, which are associated with a specified necessary operation for avoidance of collision, respectively.

3. The driving assist device for a vehicle **(1)** of any one of the preceding claims, wherein said necessary operation for avoidance of collision comprises at least one of a steering operation, an acceleration-off operation, a braking-on operation, and a watching operation, and said collision-avoidance operation determining device (13) is configured to determine at least one of the steering operation, acceleration-off operation, braking-on operation, and watching operation as the necessary operation for avoidance of collision to be conducted by the driver.

4. The driving assist device for a vehicle (**1**) of any one of the preceding claims, wherein the stimulation provided by said normal-driving-state stimulation providing device (**7, 8, 9, 14, #13-25)** comprises a warning sound, an image indicated on a head-up display and/or a steering vibration.

5. The driving assist device for a vehicle (**1**) of any one of the preceding claims, wherein said normal-driving-state stimulation providing device **(7, 8, 9, 14, #13-25**) is configured to provide the driver with the stimulation at specified limited number of times after a vehicle start.

6. The driving assist device for a vehicle (**1**) of any one of the preceding claims, wherein said normal-driving-state stimulation providing device **(7, 8, 9, 14, #13-25**) is configured to provide the driver with a normal-driving-state stimulation that is less stimulative than a collision-avoidance-state stimulation of said collision-avoidance-state stimulation providing device **(7, 8, 9,14, #26-34).**

7. A driving assist method for a vehicle (**1**), comprising the following steps:
determining **(#12)** a likelihood of collision of the vehicle against an obstacle;
determining **(#26)** a necessary operation to be conducted by the driver for avoidance of collision when the likelihood of collision of the vehicle against the obstacle is determined; and
providing **(#27-34)** the driver with a stimulation that is associated with the necessary operation for avoidance of collision so that the driver can be encouraged to conduct the necessary operation for avoidance of collision that has been determined **(#26),** including providing the driver with a recognizable stimulation that is more stimulative than a recognition limit of the driver;
**characterized by**
detecting that a specified operation is conducted by a driver at a normal driving state;
providing **(#13-25)** the driver with a specified stimulation that is associated with the specified operation when conduction of the specified operation by the driver is detected;
providing the driver with a subliminal stimulation that is less stimulative than a recognition limit of the driver so as to be memorized by the driver subliminally.

8. A computer program product which comprises computer readable instructions which, when loaded and executed on a suitable system perform the steps of a driving assist method for a vehicle (**1**) according to claim 7.

## Patentansprüche

1. Fahrhilfsvorrichtung für ein Fahrzeug (1), umfassend:
eine Zusammenstoßwahrscheinlichkeit-Bestimmungsvorrichtung (12), die wirksam ist, eine Wahrscheinlichkeit eines Zusammenstoßes des Fahrzeugs mit einem Hindernis zu bestimmen;
eine Zusammenstoßverhinderungsoperation-Bestimmungsvorrichtung (13), die wirksam ist, eine notwendige Operation zu bestimmen, die von dem Fahrer zum Verhindern eines Zusammenstoßes durchzuführen ist, wenn die Wahrscheinlichkeit eines Zusammenstoßes des Fahrzeugs mit dem Hindernis von der Zusammenstoßwahrscheinlichkeit-Bestimmungsvorrichtung (12) bestimmt wird; und
eine Zusammenstoßverhinderungszustand-Stimulations- bzw. -Anregungsbereitstellungsvorrichtung (7, 8, 9, 14, #26-34), die wirksam ist, dem Fahrer eine Stimulation bzw. Anregung zu liefern, die mit der notwendigen Operation zum Verhindern eines Zusammenstoßes verknüpft ist, so dass der Fahrer ermutigt werden kann, die notwendige Operation zum Verhindern eines Zusammenstoßes durchzuführen, die von der Zusammenstoßverhinderungsoperation-Bestimmungsvorrichtung (13) bestimmt wird, wobei Zusammenstoßverhinderungszustand-Stimulationsbereitstellungsvorrichtung (7, 8, 9, 14, #26-34) konfiguriert ist, dem Fahrer eine wahrnehmbare Stimulation bzw. Anregung zu liefern, die stärker stimuliert bzw. anregend ist als eine Wahrnehmungsgrenze des Fahrers;
**gekennzeichnet durch**
eine Detektiervorrichtung (3, 4, 5, 6, 11) für eine spezifizierte Operation, die wirksam ist zu detektieren, dass eine spezifizierte Operation von einem Fahrer in einem normalen Fahrzustand durchgeführt wird; und
eine Normalfahrzustand-Stimulations- bzw. -Anregungsbereitstellungsvorrichtung (7, 8, 9, 14, #13-25), die wirksam ist, dem Fahrer eine spezifizierte Stimulation bzw. Anregung zu liefern, die mit der spezifizierten Operation verknüpft ist, wenn das Durchführen der spezifizierten Operation **durch** den Fahrer von der Detektiervorrichtung (3, 4, 5, 6, 11) für eine spezifizierte Operation detektiert wird;
wobei die Normalfahrzustand-Stimulationsbereitstellungsvorrichtung (7, 8, 9, 14, #13-25) konfiguriert ist, dem Fahrer eine subliminale bzw. unbewusste Stimulation bzw. Anregung zu liefern, die weniger stimuliert bzw. anregend ist als eine Wahrnehmungsgrenze des Fahrers, damit sie sich der Fahrer unbewusst merken kann.

2. Fahrhilfsvorrichtung für ein Fahrzeug (1) nach Anspruch 1, wobei die Stimulation konfiguriert ist, eine Mehrzahl von wahrnehmbaren Stimulationen zu sein, die jeweils mit einer spezifizierten notwendigen Operation zum Verhindern eines Zusammenstoßes verknüpft sind.

3. Fahrhilfsvorrichtung für ein Fahrzeug (1) nach einem der vorhergehenden Ansprüche, wobei die notwendige Operation zum Verhindern eines Zusammenstoßes zumindest eine Lenkoperation, eine Runter-vom-Gas-Operation, eine Bremsoperation und eine Beobachtungsoperation umfasst, und wobei die Zusammenstoßverhinderungsoperation-Bestimmungsvorrichtung (13) konfiguriert ist, zumindest eine der Lenkoperation, Runter-vom-Gas-Operation, Bremsoperation und Beobachtungsoperation als die notwendige Operation zum Verhindern eines Zusammenstoßes zu bestimmen, die von dem Fahrer durchzuführen ist.

4. Fahrhilfsvorrichtung für ein Fahrzeug (1) nach einem der vorhergehenden Ansprüche, wobei die Stimulation, die von der Normalfahrzustand-Stimulationsbereitstellungsvorrichtung (7, 8, 9, 14, #13-25) bereitgestellt wird, einen Warnton, ein Bild, das auf einer Frontscheibenanzeige angezeigt wird, und/oder eine Lenkvibration umfasst.

5. Fahrhilfsvorrichtung für ein Fahrzeug (1) nach einem der vorhergehenden Ansprüche, wobei die Normalfahrzustand-Stimulationsbereitstellungsvorrichtung (7, 8, 9, 14, #13-25) konfiguriert ist, dem Fahrer die Stimulation eine spezifizierte Anzahl von Malen nach einem Fahrzeugstart zu liefern.

6. Fahrhilfsvorrichtung für ein Fahrzeug (1) nach einem der vorhergehenden Ansprüche, wobei die Normalfahrzustand-Stimulationsbereitstellungsvorrichtung (7, 8, 9, 14, #13-25) konfiguriert ist, dem Fahrer eine Normalfahrzustandstimulation zu liefern, die weniger stimuliert bzw. anregt als eine Zusammenstoßverhinderungszustandsstimulation der Zusammenstoßverhinderungszustand-Stimulationsbereitstellungsvorrichtung (7, 8, 9, 14, #26-34).

7. Fahrhilfsverfahren für ein Fahrzeug (1), umfassend die folgenden Schritte:
Bestimmen (#12) einer Wahrscheinlichkeit eines Zusammenstoßes des Fahrzeugs mit einem Hindernis;
Bestimmen (#26) einer notwendigen Operation, die von dem Fahrer zum Verhindern eines Zusammenstoßes durchzuführen ist, wenn die Wahrscheinlichkeit eines Zusammenstoßes des Fahrzeugs mit dem Hindernis bestimmt wird; und
Bereitstellen (#27-34) an den Fahrer einer Stimulation bzw. Anregung, die mit der notwendigen Operation zum Verhindern eines Zusammenstoßes verknüpft ist, so dass der Fahrer ermutigt werden kann, die notwendige Operation zum Verhindern eines Zusammenstoßes durchzuführen, die bestimmt (#26) wurde, einschließlich des Bereitstellens an den Fahrer einer wahrnehmbaren Stimulation bzw. Anregung, die stärker stimuliert bzw. anregend ist als eine Wahrnehmungsgrenze des Fahrers;
**gekennzeichnet durch**
Detektieren, dass eine spezifizierte Operation von einem Fahrer in einem normalen Fahrzustand durchgeführt wird;
Bereitstellen (#13-25) an den Fahrer einer spezifizierten Stimulation bzw. Anregung, die mit der spezifizierten Operation verknüpft ist, wenn das Durchführen der spezifizierten Operation **durch** den Fahrer detektiert wird;
Bereitstellen an den Fahrer einer subliminalen bzw. unbewussten Stimulation bzw. Anregung, die weniger stimuliert bzw. anregend ist als eine Wahrnehmungsgrenze des Fahrers, damit sie sich der Fahrer unbewusst merken kann.

8. Computerprogrammprodukt, das computerlesbare Instruktionen umfasst, die, wenn auf einem geeigneten System geladen und ausgeführt, die Schritte eines Fahrhilfsverfahrens für ein Fahrzeug (1) nach Anspruch 7 ausführen.

## Revendications

1. Dispositif d'aide à la conduite pour un véhicule (1), comprenant :
un dispositif de détermination de probabilité de collision (12) opérant pour déterminer une probabilité de collision du véhicule contre un obstacle ;
un dispositif de détermination d'opération d'évitement de collision (13) opérant pour déterminer une opération nécessaire devant être menée par le conducteur pour éviter la collision lorsque la probabilité de collision du véhicule contre l'obstacle est déterminée par ledit dispositif de détermination de probabilité de collision (12) ; et
un dispositif fournissant une stimulation d'état d'évitement de collision (7, 8, 9, 14, n° 26 à 34) opérant pour fournir au conducteur une stimulation qui est associée à l'opération nécessaire pour éviter la collision de sorte que le conducteur peut être encouragé à mener l'opération nécessaire pour éviter la collision qui est déterminée par ledit dispositif de détermination d'opération d'évitement de collision (13), dans lequel ledit dispositif fournissant une stimulation d'état d'évitement de collision (7, 8, 9, 14, n° 26 à 34) est configuré pour fournir au conducteur une stimulation reconnaissable qui est plus stimulante qu'une limite de reconnaissance du conducteur ;
**caractérisé par**
un dispositif de détection d'opération spécifiée (3, 4, 5, 6, 11) opérant pour détecter qu'une opération spécifiée est menée par un conducteur dans un état de conduite normal ; et
un dispositif fournissant une stimulation d'état de conduite normal (7, 8, 9, 14,
n° 13 à 25) opérant pour fournir au conducteur une stimulation spécifiée qui est associée à l'opération spécifiée lorsque la réalisation de l'opération spécifiée par le conducteur est détectée par ledit dispositif de détection d'opération spécifiée (3, 4, 5, 6, 11) ;
dans lequel ledit dispositif fournissant une stimulation d'état de conduite normal (7, 8, 9, 14, n° 13 à 25) est configuré pour fournir au conducteur une stimulation subliminale qui est moins stimulante qu'une limite de reconnaissance du conducteur de manière à être mémorisée par le conducteur de manière subliminale.

2. Dispositif d'aide à la conduite pour un véhicule (1) selon la revendication 1, dans lequel ladite stimulation est configurée pour être une pluralité de stimulations reconnaissables qui sont associées à une opération nécessaire spécifiée pour éviter la collision, respectivement.

3. Dispositif d'aide à la conduite pour un véhicule (1) selon l'une quelconque des revendications précédentes, dans lequel ladite opération nécessaire pour éviter la collision comprend au moins une opération parmi une opération de braquage, une opération d'arrêt d'accélération, une opération de freinage et une opération d'observation, et ledit dispositif de détermination d'opération d'évitement de collision (13) est configuré pour déterminer au moins une opération parmi l'opération de braquage, l'opération d'arrêt d'accélération, l'opération de freinage et l'opération d'observation en tant qu'opération nécessaire pour éviter la collision devant être menée par le conducteur.

4. Dispositif d'aide à la conduite pour un véhicule (1) selon l'une quelconque des revendications précédentes, dans lequel la stimulation fournie par ledit dispositif fournissant une stimulation d'état de conduite normal (7, 8, 9, 14, n° 13 à 25) comprend un son d'avertissement, une image indiquée sur un affichage à tête haute et/ou une vibration de braquage.

5. Dispositif d'aide à la conduite pour un véhicule (1) selon l'une quelconque des revendications précédentes, dans lequel ledit dispositif fournissant une stimulation d'état de conduite normal (7, 8, 9, 14, n° 13 à 25) est configuré pour fournir au conducteur la stimulation un nombre de fois limité spécifié après un démarrage du véhicule.

6. Dispositif d'aide à la conduite pour un véhicule (1) selon l'une quelconque des revendications précédentes, dans lequel ledit dispositif fournissant une stimulation d'état de conduite normal (7, 8, 9, 14, n° 13 à 25) est configuré pour fournir au conducteur une stimulation d'état de conduite normal qui est moins stimulante qu'une stimulation d'état d'évitement de collision dudit dispositif fournissant une stimulation d'état d'évitement de collision (7, 8, 9, 14, n° 26 à 34).

7. Procédé d'aide à la conduite pour un véhicule (1), comprenant les étapes suivantes :
déterminer (n° 12) une probabilité de collision du véhicule contre un obstacle ;
déterminer (n° 26) une opération nécessaire devant être menée par le conducteur pour éviter la collision lorsque la probabilité de collision du véhicule contre l'obstacle est déterminée ; et
fournir (n° 27 à 34) au conducteur une stimulation qui est associée à l'opération nécessaire pour éviter la collision de sorte que le conducteur peut être encouragé à mener l'opération nécessaire pour éviter la collision qui a été déterminée (n° 26), y compris fournir au conducteur une stimulation reconnaissable qui est plus stimulante qu'une limite de reconnaissance du conducteur ;
**caractérisé par**
la détection qu'une opération spécifiée est menée par un conducteur dans un état de conduite normal ;
la fourniture (n° 13 à 25) au conducteur d'une stimulation spécifiée qui est associée à l'opération spécifiée lorsque la réalisation de l'opération spécifiée par le conducteur est détectée ;
la fourniture au conducteur d'une stimulation subliminale qui est moins stimulante qu'une limite de reconnaissance du conducteur de manière à être mémorisée par le conducteur de manière subliminale.

8. Produit de programme informatique qui comprend des instructions lisibles par ordinateur qui, lors de leur chargement et exécution sur un système approprié, réalisent les étapes d'un procédé d'aide à la conduite pour un véhicule (1) selon la revendication 7.
